# EUROPEAN PATENT APPLICATION

(11) **EP 3 514 184 A1**
(43) Date of publication of application: **24.07.2019**
(21) Application number: 18000508.4
(22) Date of filing: 08.06.2018
(51) Int. Cl.: C08F 2/18, C08F 2/30, C08F 220/02, C09D 133/08, C09D 133/14

(54) **ALKALI-SOLUBLE EMULSION RESIN AND PRODUCTION METHOD**

(30) Priority: 18.01.2018 TR 1800692
(71) Applicant: Kansai Altan Boya Sanayi ve Ticaret Anonim Sirketi, Izmir (TR)
(72) Inventor: GAFFAROGULLARI, Murrat, 35730 Ankara Yolu (Ansizca) (TR)
(74) Representative: Sevinç, Cenk

(57) **Abstract**

Present invention relates to an acrylic monomer based emulsion resin produced by means of emulsion polymerization technique and production method utilized in coating applications carried out by roller in the field of surface coating particularly for surfaces of flat wooden panels.

## Description

### Related Technical Field

The present invention relates to an acrylic monomer based emulsion resin produced by means of emulsion polymerization technique and production method utilized in coating applications carried out by roller in the field of surface coating particularly for surfaces of flat wooden panels.

### State of the Art

Acrylic resins can be categorized as thermoplastic resins and thermoset resins. Thermoplastic acrylic resins are resins that soften when heated. Thermoplastic acrylic resins possess high characteristics in terms of color, luminescence, alkali and oxidation resistance, rigidity, adhesion and have an important role among coating formulas.

Acrylic resins are produced through different processes for different purposes. Essentially, there are four different production processes.
- Emulsion polymerization process
- Water reducible process
- Polymer dispersion process within non-aqueous media
- Thermoplastic or thermosetting resin production process in solvent

The technique of emulsion polymerization is a process towards preparing polymers within aqueous dispersion. Polymerization occurs in standalone surfactant (surface active agent) micelles and consequently a dispersion that possesses particles with 0,01-0,5-micron radius emerges.

Although the method of emulsion polymerization has been utilized in polymer production for years, kinetics of the reaction mechanism has not been completely unraveled due to the complexity of heterogeneous medium, plethora of substances that gets involved in the system and inclusion of varied physical and chemical events in the same system.

Water is typically used as the emulsion medium in emulsion polymerization. Monomers are distributed inside this particular medium with the assistance of an emulsifying surfactant substance. Hydrophilic and hydrophobic groups are present within the molecular structure of the surfactant substance. There are various other substances in emulsion system apart from these basic components. For instance, mercaptan compounds are entrained in order to control the molecular weight of polymer. Depending on the polymer system compounds such as potassium persulphate, sodium meta bisulphite, ammonium persulphate, etc. are used as catalyzers.

In existing practices, the foremost surfactant structure used in emulsion polymerization is APEO. (Alkyl phenol ethoxylate). Commonly used APEO structed surfactant has quite a lot of adverse effects on human health. Furthermore, the selection of surfactants utilized in emulsion polymerization should be made based on the composition of acrylic co-monomers to be used in emulsion polymerization.

The invention numbered KR101507315 mentioned in the state of the art relates to an environmentally friendly acrylic emulsion resin composition with high stability used as an adhesive for various tapes, stickers, label sheets, films, printed matters, etc.; and to a manufacturing method thereof.

In emulsion polymers produced with surfactant selections the equilibrium of hydrophobicity/hydrophilicity cannot be procured and it affects the film amount formed on flat wooden panels and the smoothness of surface in coating applications carried out with a roller. A prohibited and deleterious surfactant must not be utilized in obtaining of the appropriate product.

### Objective of the Invention

The objective of the present invention is to procure an adamant emulsion resin output without comprising hazardous components as surfactants in the emulsion resin output on human health by using surfactants that consisting of non-ionic segments inclusive sulphate, sulphonate, ammonium and disulphonate (geminal) group or by utilizing double bond containing types (reactive soap) of this variety, ensuring the optimization of film amount transferred during coating to wooden surface to which resin will be applied.

Another object of the invention is to procure the necessary molecular size required for the transfer of coating film through the limitation of the molecular weight by using compounds containing mercaptan functional group as chain transfer agent in emulsion resin output.

Another object of the invention is to achieve a complete hydrophobicity/hydrophilicity equilibrium in emulsion polymers produced with surfactant selections.

Another object of the invention is to ensure optimization for the film formed on panel in terms of amount, thickness, homogeneity and surface smoothness in coatings of wooden surfaces carried out with a roll.

### Disclosure of the Invention

Present invention relates to an acrylic monomer based emulsion resin produced by means of emulsion polymerization technique and production method utilized in coating applications carried out by roller in the field of surface coating particularly for surfaces of flat wooden panels.

In the subject matter invention emulsion resin output;
- as surfactant; a composition of sulphate, sulphonate containing 4 - 7 gr non-ionic segments, surfactants containing ammonium and disulphonate (geminal) group or mixtures comprising one or several or all of the double bond inclusive types selected from these varieties is used.
- as chain transfer agent; a composition comprising of mixtures formed out of one or several or all of 0.3 - 0.8 gr of mercaptan compounds that limit the molecular weight of polymer as desired by means of chain transfer mechanism, 90 - 120 gr of deionized water, 16 - 20 gr of acrylic or methacrylic acid which is one of the acrylic monomers that constitute polymer structure at the end of the reaction, 5 - 15 gr of styrene which is the hydrophobic component of acrylic emulsion resin, alpha-methyl styrene, one or several of hydrophobic monomers from the group of vinyl toluene, 40 - 70 gr ethyl, butyl, methyl acrylate and one or several of monomers from the group of methacrylate group, 0.0015 - 0.0030 gr of iron, copper, manganese salts, preferably selected from sulphate salt is used.
- as oxidizer, 0.1 - 0.3 gr of a composition consisting of one or mixtures of several or all of compounds selected from ammonium, sodium or potassium persulphate is used.
- as reductor; 0.1 - 0.3 gr of composition consisting of one or mixtures of several or all of compounds selected from sodium disulphide, sodium thiosulphate, sodium metabisulphide is used.
- as thermal initiator; 0.1 - 0.3 gr of a composition consisting of one or mixtures of several or all of compounds selected from 0.02 - 0.06 gr AIBN (Azobisisobutyronitrile), AMBN (Methylated Azobisisobutyronitrile), t-butyl hydroperoxide is used.
- and it further contains 0.010 - 0.03 gr of mineral oil or silicone based antifoam compound and 0.1 - 0.2 gr of antibacterial agent.

In the employed method in obtaining of the subject matter invention emulsion resin composition, at least two cylindrical reactors with resembling stirred volume are used and at least one of the reactors have heating and cooling device. Subject matter emulsion resin composition obtaining method comprises the steps of;
- composing and mixing of colloidal monomer emulsion namely "monomer emulsion" or pre-emulsion by means of adding deionized water, surfactant, mercaptan compound, acrylic monomer mixture that has vinyl group to the first reactor,
- mixing one or more of the compounds of oxidizing ammonium, sodium or potassium persulphate within the first auxiliary tank and homogenizing deionized water solution by mixing,
- mixing of one or more of reductive compounds of sodium disulphide, sodium thiosulphate, sodium disulphide, sodium metabisulphide within the second auxiliary tank and homogenizing deionized water solution by stirring,
- adding one of the compounds containing deionized water, iron, copper, manganese salts, preferably sulphate salt, adding one of the thermal initiator compounds of AIBN (Azobisisobutyronitrile), AMBN (Methylated Azobisisobutyronitrile), t-butyl hydroperoxide and further adding 10-50 of colloidal monomer emulsion produced within the first reactor to the second reactor which is the main reactor in which the reaction shall actualize,
- adding and stirring of mixtures of oxidizing compound + deionized water (1st vessel mixture) and reductive compound + deionized water (2nd vessel mixture) prepared in different vessels onto the mixture inside the main reactor,
- adding all of remaining materials within the first reactor and oxidizing material prepared within the first auxiliary tank and reductive material prepared within the second auxiliary tank to be stirred for 3 - 6 hours and remain constant at 50 - 60°C into the main reactor pursuant to termination of exothermic reaction within the second reactor which is the main reactor,
- adding mixture of thermal initiator + deionized water (3rd vessel mixture) prepared in a separate vessel to the main reactor after stirring of combined materials within the main reactor for 3 - 6 hours at 50 - 60°C and keeping and resting it at 50 - 60°C stable temperature,
- cooling of mixture within the main reactor to 30 - 40°C and putting antifoam and antibacterial agent inside the main reactor along with deionized water and carrying out filtration procedure.

Antifoam compound is used in order to increase the film forming capability of emulsion resin composition obtained in consequence of above described subject matter invention production method of emulsion resin composition for the purpose of facilitating the process of packaging by preventing foam formation.

Antibacterial agent is utilized in order to protect emulsion resin compositions which assume their final form in water from bacteria throughout stock longevity.

In the subject matter invention emulsion resin composition sulphate, sulphonate, ammonium that contains nonionic segments and surfactants that include disulphonate group (geminal) or double bond containing types of these varieties. Surfactant(s) used in the composition of emulsion resin output in order to produce nanometer-sized (<30 nm) surfactant micelles materialized within reaction in emulsion polymerization, for including long alkali chain thereby, provide absorption into micelle and polymerization of both apolar and polar acrylic monomers during reaction in addition to anionic structures. Thus, potential pollution that may materialize in emulsion polymerization is prevented. Not using APEO as a surfactant substantially prevents negative effects of surfactant on human health therewith.

Styrene, alpha-methyl styrene, one or several of hydrophobic monomers belonging to vinyl toluene group are the hydrophobic components of acrylic emulsion resin. These ensure that transfer amount to be at the desired level during the coating process of flat wooden panel with roller which is the final location of use for emulsion resin. Use of mercaptan compounds as the chain transfer agent was preferred by this means molecular weight of polymer can be limited in the desired way through chain transfer mechanism.

After subject matter invention emulsion resin composition is obtained, it is utilized in coating compositions by being neutralized with preferred neutralization agent in compliance with acid value.

In the subject matter invention emulsion resin composition different acrylic monomer mixtures can be used. Mixtures of different acrylic monomers (Methacrylic Acid, Acrylic Acid, Methyl Methacrylate, Styrene, Butyl Acrylate, Ethyl Acrylate) can be used on condition that total monomer amount remains the same and acid value of the mixture is kept between 120-200 mg KOH/gS and selection of monomers that constitute the monomer mixture is made by taking hydrophobicity/hydrophilicity balance into consideration. Amounts of other compounds within the composition should be reformulated for each monomer composition.

In coating of wooden surfaces carried out with roller optimization was achieved through the obtained emulsion resin in terms of film amount formed on panel, thickness, homogeneity and smoothness of surface. Film amount that form on panel required for optimization was acquired by means of measuring solid coating amount (weight) transferred to wooden panel through roller machine. Abovementioned measurement is demonstrated on Table 1 with "Bute" value. Should the film amount that form on panel is transferred during coating at an excessive amount of weight, "Bute" (ripple, roller marks) is generated before film can spread. Therefore, Bute value is anticipated to be low and close to the standard. Value set as the standard is the APEO content commercial surfactant used in the state of the art which is hazardous to human health.

"Bute" value for the subject matter invention obtained emulsion resin composition is low and at a value that is close to the standard and has resembling characteristic to 5-minute work of the standard which showed the fact that there will be no structural changes in "Bute", thus demonstrating the achieved optimization in terms of film amount that forms on panel, thickness, homogeneity and surface smoothness.

Although transfer amount of emulsion resin composition is high in terms of viscosity, it had parallels with APEO content commercial surfactant which is accepted as standard and used in the state of the art and which is hazardous to human health and a controlled transfer was achieved.

**Table 1: Optimization Test Results**

| | **Coating Tests** | | | | | **Roller Tests** | |
|---|---|---|---|---|---|---|---|
| **Surfactant** | **Glass Dispersion Test** | **Water and Scrubbing** | **Viscosity D6/20°C** | **Solidity %** | **Hiding Power** | **Transfer gr (3 pas)** | **Bute** |
| A composition consisting of sulphate, sulphonate, surfactants containing ammonium and disulphonate group (geminal) or mixtures comprising one or several or all of the double bond inclusive types selected from these varieties. | =std | >100 | 158 --- >170 | 64,2 | >std | 79,44 | ≈ std |

In coating tests, applied film to 30-micron-thick glass and to coating paper by means of film applicator is defined. After visual diffusion and film on glass dried out (oven dried at 60 C for 3-4 minutes) re-dissolution characteristics were tested by dripping water upon. Diffusion amount on glass was determined to be equal to APEO content commercial surfactant amount used in the state of the art which is hazardous to human health. Furthermore, >100 value obtained as a result of water and scrubbing tests is a decent value expected of emulsion resin compositions which demonstrated the non-decomposing characteristic of obtained composition through scrubbing action.

## Claims

1. The present invention relates to an acrylic monomer based emulsion resin comprising components that are non-hazardous to human health and used in coating applications carried out with roller devices in the field of surface coating, particularly for flat wooden panel surfaces and produced with emulsion polymerization technique in which deionized water, methacrylic acid, ethyl acrylate, iron sulphate heptahydrate, ammonium persulphate, sodium metabisulphide, t-butyl hydroperoxide are used, **characterized by** comprising; **surfactant** used in emulsion polymerization with a composition comprising of nonionic segments containing sulphate, sulphonate, ammonium and surfactants including disulphonate group (geminal) or mixtures consisting of one or several or all of double bond inclusive types selected from these varieties and that procures the optimization of film amount in monomer composition to be transferred to wooden surface during coating application; **chain transfer agent** with a composition comprising mercaptan compounds that enable the limiting of molecular weight of polymer through chain transfer mechanism in the desired way, deionized water which is used as a reaction medium in emulsion polymerization; acrylic and methacrylic acid which is one of the acrylic monomers that forms the polymer structure at the end of the reaction, one or several of hydrophobic monomers of vinyl toluene group, styrene, alpha-methyl styrene which are the hydrophobic components of acrylic emulsion resin, one or several of monomers of methacrylate group, methyl acrylate, butyl, ethyl; mixtures consisting of one or several or all selected from iron, copper, manganese salts, preferably sulphate salt; **oxidizer** with composition comprising mixtures composed of one or several or all of selected compounds of ammonium, sodium or potassium persulphate; reductor with a composition comprising mixtures consisting of one or several or all compounds selected of sodium disulphide, sodium thiosulphate, sodium metabisulphide, thermal initiator with a composition comprising mixtures consisting of one or several or all of selected compounds of 0.02 - 0.06 gr AIBN (Azobisisobutyronitrile), AMBN (Methylated Azobisisobutyronitrile), t-butyl hydroperoxide, 0.010 - 0.03 gr mineral oil or silicon based antifoam compound and 0.1 - 0.2 gr antibacterial agent.

2. Acrylic monomer based emulsion resin comprising non-hazardous components to human health according to claim 1 and **characterized in that** its surfactant composition content is at 4 - 7 gr.

3. Acrylic monomer based emulsion resin comprising non-hazardous components to human health according to claim 1, **characterized in that** the content of composition of its chain transfer agent comprises 0.3-0.8 gr of mercaptan compounds, 90-120 gr of deionized water, 16-20 gr of acrylic or methacrylic acid, 5-15 gr of styrene, 40-70 gr of one or several monomers of ethyl, butyl, methyl acrylate and methacrylate group, 0.0015-0.0030 gr of one or several of selected out of iron, copper, manganese salts, preferably sulphate salt.

4. Acrylic monomer based emulsion resin comprising non-hazardous components to human health according to claim 1, **characterized in that** the content of composition of its thermal initiator comprises; 0.02 - 0.06 gr of one or several of the compounds of AIBN (Azobisisobutyronitrile), AMBN (Methylated Azobisisobutyronitrile), t-butyl hydroperoxide.

5. Acrylic monomer based emulsion resin comprising non-hazardous components to human health according to claim 1, **characterized in that** its mineral oil or silicon based antifoam compound is 0.010 - 0.03 gr.

6. Acrylic monomer based emulsion resin comprising non-hazardous components to human health according to claim 1, **characterized in that** its antibacterial agent is 0.1 - 0.2 gr.

7. The present invention is a method employed in obtaining of acrylic monomer based emulsion resin composition containing non-hazardous components to human health, **characterized by** comprising the process steps of;
• composing and mixing of colloidal monomer emulsion namely "monomer emulsion" or pre-emulsion by means of adding deionized water, surfactant, mercaptan compound, acrylic monomer mixture that has vinyl group to the first reactor,
• mixing one or more of the compounds of oxidizing ammonium, sodium or potassium persulphate within the first auxiliary tank and homogenizing deionized water solution by mixing,
• mixing of one or more of reductive compounds of sodium disulphide, sodium thiosulphate, sodium disulphide, sodium metabisulphide within the second auxiliary tank and homogenizing deionized water solution by stirring,
• adding one of the compounds containing deionized water, iron, copper, manganese salts, preferably sulphate salt, adding one of the thermal initiator compounds of AIBN (Azobisisobutyronitrile), AMBN (Methylated Azobisisobutyronitrile), t-butyl hydroperoxide and further adding 10-50 of colloidal monomer emulsion produced within the first reactor to the second reactor which is the main reactor in which the reaction shall actualize,
• adding and stirring of mixtures of oxidizing compound + deionized water (1st vessel mixture) and reductive compound + deionized water (2nd vessel mixture) prepared in different vessels onto the mixture inside the main reactor,
• adding all of remaining materials within the first reactor and oxidizing material prepared within the first auxiliary tank and reductive material prepared within the second auxiliary tank to be stirred for 3 - 6 hours and remain constant at 50 - 60°C into the main reactor pursuant to termination of exothermic reaction within the second reactor which is the main reactor,
• adding mixture of thermal initiator + deionized water (3rd vessel mixture) prepared in a separate vessel to the main reactor after stirring of combined materials within the main reactor for 3 - 6 hours at 50 - 60°C and keeping and resting it at 50 - 60°C stable temperature,
• cooling of mixture within the main reactor to 30-40°C and putting antifoam and antibacterial agent inside the main reactor along with deionized water and carrying out filtration procedure.

8. Method employed in obtaining of acrylic monomer based emulsion resin composition containing non-hazardous components to human health according to claim 7, **characterized in that** adding 0.1-0.3 gr of oxidizing material prepared within the first auxiliary tank to the main reactor.

9. Method employed in obtaining of acrylic monomer based emulsion resin composition containing non-hazardous components to human health according to claim 7, **characterized in that** adding 0.1-0.3 gr of reductive material prepared within the second auxiliary tank to the main reactor.

10. Method employed in obtaining of acrylic monomer based emulsion resin composition containing non-hazardous components to human health according to claim 7, **characterized in that** adding 0.1-0.3 gr of thermal initiator compound composition to the main reactor.

11. Method employed in obtaining of acrylic monomer based emulsion resin composition containing non-hazardous components to human health according to claim 7, **characterized in that** neutralizing resin composition obtained as a result of employed method by using preferred neutralization agent in compliance with acid value and utilizing it in coating compositions.
